# EUROPEAN PATENT APPLICATION

(11) **EP 4 650 271 A1**
(43) Date of publication of application: **19.11.2025**
(21) Application number: 24305744.5
(22) Date of filing: 14.05.2024
(51) Int. Cl.: B64C 11/26, B29C 70/38, B29D 99/00, B64C 11/20

(54) **BLADE SPAR**

(71) Applicant: Ratier-Figeac SAS, 46101 Figeac Cedex (FR)
(72) Inventor: PLO, Hervé, 46101 Figeac Cedex (FR); TREMOLIERES, Benoit, 46101 Figeac Cedex (FR)
(74) Representative: Dehns

(57) **Abstract**

A blade spar for a rotor blade for a rotor of an aircraft or vessel, preferably wherein the rotor is a propeller, the blade spar comprising a laminate structure, the laminate structure comprising a plurality of plies of fibres in a matrix, wherein the blade spar has generally a longitudinal axis defining a longitudinal direction, the longitudinal axis extending along a radial direction of the rotor, wherein the blade spar comprises at least a portion that is curved from the longitudinal axis, wherein the plurality of plies comprises a first ply comprising a plurality of first fibres, wherein an alignment of the first fibres varies along the longitudinal direction to align the first fibres to the curved blade spar.

## Description

### FIELD OF THE INVENTION

The invention relates to a blade spar, a rotor blade for a rotor of an aircraft or vessel, and methods of manufacturing blade spars and rotor blades.

### BACKGROUND

Blade spars provide structural support to blades, such as propeller blades. A blade spar may include a laminate structure to provide superior mechanical characteristics of the blade. The laminate structure may be formed from several layer or plies, each ply comprising fibres extending across the surface of the ply. Manufacturing laminate structures can be a labour-intensive and costly process, with significant material waste, particularly where a blade spar has a complex shape.

### SUMMARY

In a first aspect there is provided a blade spar for a rotor blade for a rotor of an aircraft or vessel, the blade spar comprising a laminate structure, the laminate structure comprising a plurality of plies of fibres in a matrix, wherein the blade spar has a longitudinal axis defining a longitudinal direction, the longitudinal axis extending along a radial direction of the rotor, wherein the blade spar comprises at least a portion that is curved from the longitudinal axis, wherein the plurality of plies comprises a first ply comprising a plurality of first fibres, wherein alignment of the first fibres varies along the longitudinal direction to align the first fibres to the curved blade spar
By aligning the first fibres to the curvature of the blade spar, material wastage may be reduced and mechanical properties of the blade spar improved.

In an example, the rotor is an aircraft propeller. In an example, the rotor blade is an aircraft propeller blade.

In an example, the blade spar comprises a root.

In an example, at the root the first fibres are substantially aligned to the longitudinal axis.

In an example, the blade spar comprises a tip.

In an example, at the tip the first fibres are not aligned to the longitudinal axis.

In an example, the blade spar tapers towards the tip. A chord length may reduce to cause the blade spar to taper towards the tip. A thickness may reduce to cause the blade spar to taper towards the top.

In an example, a portion of the first fibres do not extend to the tip.

In an example, the blade spar is curved towards a tangential direction, wherein the tangential direction is normal to the longitudinal direction in the plane of rotation of the rotor.

In an example, the first fibres are curved towards the tangential direction.

In an example, the blade spar is curved towards an axial direction, wherein the axial direction is parallel to the rotation axis of the rotor.

In an example, the first fibres are curved towards the axial direction.

In an example, the blade spar twists along the longitudinal direction.

In an example, the first fibres twist along the longitudinal direction to follow the blade spar.

In an example, the first fibres are formed from tape.

In an example, the first fibres are formed of carbon.

In an example, the blade spar comprises a plurality of first plies.

In an example, the first fibres are placed with an automated fibre placement process to form the first ply
In an example, the plurality of plies comprises a second ply, wherein fibres of the second ply are orientated at ±α to the longitudinal axis, α being in the range 30° to 60° to the longitudinal axis. In an example α is substantially 45° to the longitudinal axis.

In an example, the plurality of plies comprises a a further second ply, wherein fibres of the second and further second plies are orientated substantially symmetrically relative to the longitudinal axis.

In an example, the fibres of the second and/or further second plies are manually placed. In an example, the fibres of the second and/or further second plies are automatically placed.

According to a second aspect there is provided a rotor blade for a rotor of an aircraft or vessel comprising the blade spar described above. In an example, the rotor blade is a propeller blade. In an example, the rotor is a propeller.

According to a third aspect there is provided a method of manufacturing a blade spar or rotor blade as described above. In an example the method comprises using an automated fibre placement process to align the first fibres.

### BRIEF DESCRIPTION OF THE DRAWINGS

Various examples will now be described with reference to the accompanying drawings in which:
Fig. 1 shows a blade spar for a propeller blade viewed along an axis of rotation of the propeller blade;
Fig. 2 shows a cross-sectional view of the blade spar;
Fig. 3 shows a perspective view of the blade spar.
Fig. 4 shows a method of manufacturing the blade spar.

### DETAILED DESCRIPTION

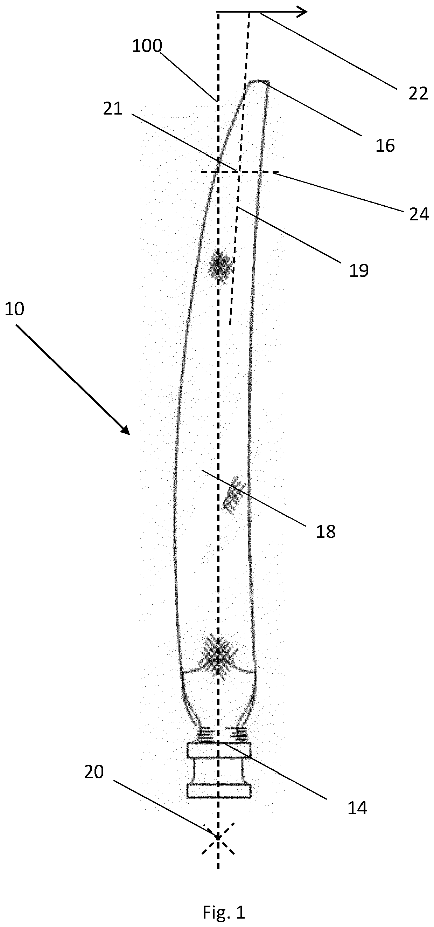

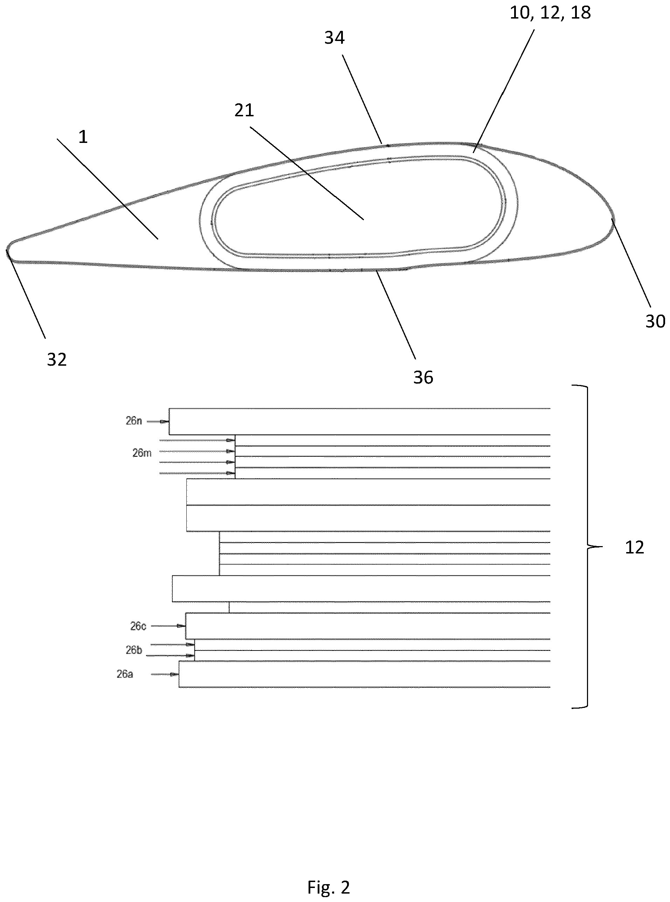

With reference to Fig. 1 and 2 there is shown a blade spar 10 for a rotor blade. The rotor blade is for a rotor for an aircraft or vessel. In the present example, the rotor blade is an aircraft propeller blade 1. The blade spar 10 comprises a laminate structure 12 to provide structural support to the propeller blade.

The blade spar 10 comprises a root 14, a tip 16 and a body 18 extending from the root 14 to the tip 16. The blade spar 10 has a longitudinal axis 100, which defines a longitudinal direction parallel to the longitudinal axis. The longitudinal axis 100 is perpendicular to and extends radially outward from a rotation axis 20 of the propeller blade. The longitudinal axis 100 extends along a radial direction of the rotor.

As shown in Fig. 1, while the tip 16 is longitudinally displaced from the root 14, the blade spar 10 is curved from the longitudinal axis 100. More specifically, along the body 18 moving in a longitudinal direction, the local blade axis 19 at a given point along the section (i.e. the axis extending through the centre 21 e.g. first moment of area of the section) is generally not aligned with the longitudinal axis of the blade spar 10 due to the blade spar being curved (aside from at the root 14 where the local blade axis is aligned with the longitudinal axis).

In the present example, the blade spar 10 is illustrated to be curved towards a tangential direction 22 (such that the local blade axis has a component in the tangential direction 22). The tangential direction 22 is normal to the longitudinal direction. The tangential direction 22 is in the plane of rotation of the propeller blade (i.e. in the plane of the page of Fig. 1). In other examples, the blade spar 10 is curved towards an axial direction. The axial direction is parallel to the rotation axis of the propeller blade (i.e. into and/or out of the page of Fig. 1). The blade spar 10 may also twist when moving from the root 14 to the tip 16. In examples, the blade spar 10 may be curved towards both the tangential and axial directions and may have an other combination of tangential and/or axial curvature and/or twist (e.g. curvature towards the axial direction and twist, curvature towards the tangential direction and twist, curvature towards both the axial and tangential directions and twist).

As illustrated in Fig. 2 (which shows a section along the line 24 illustrated in Fig. 1), the laminate structure 12 comprises a plurality of plies 26a-n. The plies 26a-n may be on a suction face 34 and/or on a pressure face 36 of the blade spar 10. Each ply 26a-n is formed of a composite material and comprises fibres in a matrix. Each ply 26a-n provides a layer of the laminate structure 12. In the present example, the fibres are formed of a carbon material or equivalent and the matrix is formed of a plastic material e.g. a thermoplastic or thermosetting material.

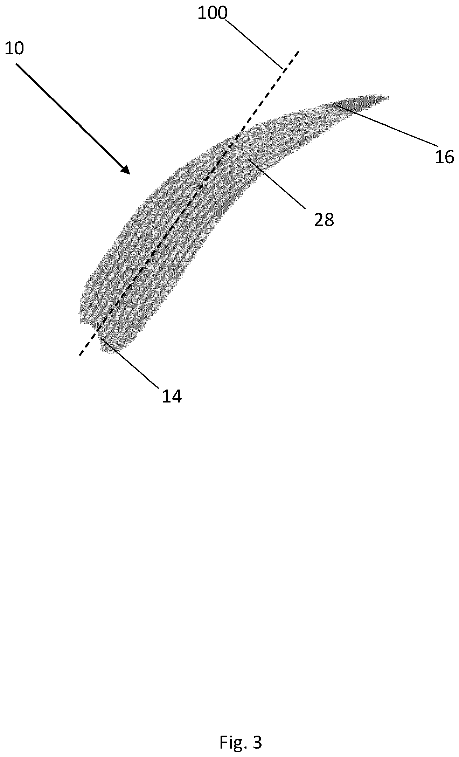

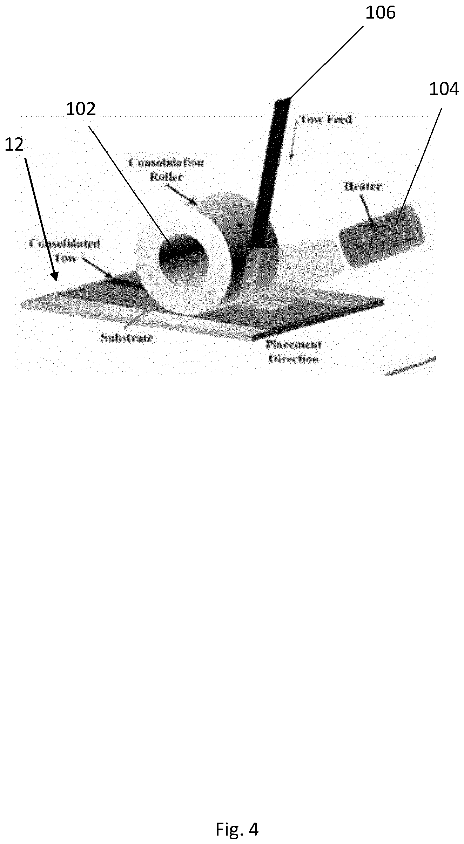

The plurality of plies 26a-n comprises a first ply 26b, which is described in more detail below with respect to Fig. 3 and 4. The plurality of plies 26a-n comprises a plurality of first plies which are identical to the first ply 26b, with an additional first ply 26m illustrated in Fig. 2. Some plies are omitted from Fig. 2 and it will be understood that more than two first plies may be included.

The plurality of plies 26a-n comprises a second ply 26a, which is outward of and directly adjacent to the first ply 26b. The plurality of plies comprises a further second ply 26c, which is inward of and directly adjacent to the first ply 26b. Fibres of the second ply 26a and the further second ply 26c are aligned at ±α to the longitudinal axis, α being in the range 30° to 60° to the longitudinal axis. In the present example, α is 45°. In other examples α may be an alignment relative to the orientation of the first ply 26b.

Fibres of the second ply 26a are orientated symmetrically to the fibres of the further second ply 26c relative to the longitudinal axis. Fibres of the second ply 26a are braided at ±α to the longitudinal axis 100 and fibres of the further second ply 26c are also braided at ±α to the longitudinal axis 100, with α being for instance equal to 45°. The terms "first", "second" and "further" do not necessarily imply an order of placement of the pies.

The fibres of the second ply 26a and the further second ply 26c are manually placed (e.g. following a braiding / winding process, which may be automated) on a substrate to form the second plies 26a, 26c. In other examples, the fibres of the second ply 26a and/or further second ply 26c may be placed via an automated process.

It will be understood that additional ±45° plies may be provided, including ply 26n, with some omitted from Fig. 2 for clarity. Generally, the plurality of plies alternate between a first ply 26b and a ±45° ply in the composite structure. In examples, a plurality of first plies may be adjacent to each and/or a plurality of second plies may be adjacent to each other.

Fig. 3 shows a perspective view of the blade spar 10 with the first ply 26b exposed to illustrate the orientation of the fibres 28 (referred to herein as "first fibres 28") of the first ply 26b.

At the root 14, the first fibres 28 are substantially aligned to the longitudinal axis 100. Alignment of the first fibres 28 varies along the longitudinal direction (i.e. along the body 18 when moving from the root 14 to the tip 16) to align the first fibres 28 to the curved blade spar 10. This means that generally along the body 18 the first fibres 28 are not aligned to the longitudinal axis. Along the body 18 the first fibres 28 are generally aligned to the local blade axis 19. At the tip 16, the first fibres 28 are not aligned to the longitudinal axis. In other examples, the blade spar 10 and/or first fibres 28 are not aligned to the longitudinal axis at the root 14.

It will be understood that in order to be aligned to the curved blade spar the first fibres 28 may not be precisely aligned to the local blade axis 19. Additionally, in the first ply 28 at a given section there may be fibres which are not aligned to the curved blade spar (e.g. due to all fibres not being aligned with each other at that section, for example, due to a leading edge 30 and/or a trailing edge 32 not being parallel to each other).

The blade spar 10 tapers (e.g. decreasing in chord length or thickness, the chord length being defined as the distance between the leading edge 30 and the trailing edge 32 from root 14 to tip 16. As such, a portion of the first fibres 28 do no extend to the tip 16, with some first fibres 28 terminating where the width of body 18 reduces. In other examples, the blade spar 10 may also taper towards the root 14 (e.g. with an outward section of the body 18 being wider than an inward section of the body 18). In such examples, some first fibres 28 may not reach the root 14.

As described above, in the present example, the blade spar 10 is curved towards the tangential direction. In order to align the first fibres 28 to the curvature of the blade spar 10, the first fibres 28 also curve towards the tangential direction. In other examples where the blade spar 10 is curved towards the axial direction, the first fibres 28 also curve towards the axial direction. The first fibres 28 also follow the twist of the blade spar 10.

The first fibres 10 generally extend parallel to each other. The first fibres are formed from a carbon tape (e.g. a dry carbon slit tape with thermoplastic veil).

Fig. 4 illustrates a method of manufacturing the first ply 26b, which uses an automated fibre placement process to align the first fibres 28 to the curved blade spar 10. This method forms part of a method of manufacturing the blade spar 10 and propeller blade 1 (comprising other steps such as braiding / winding the fibres and manually placing the fibres of the second plies).

In the method of manufacturing the first ply 26b, the first fibres 28 are provided from a tow of tape (not shown). A roller 102 is used to apply the fibres to a substrate 12 (e.g. provided by the further second ply 26c) by applying a force the first fibres 28. A heater 104 simultaneously heats the tape to adhere the first fibres 28 to the substrate 12. By controlling the position of the tow feed 106 and the orientation of the roller 102, the orientation of the first fibres 28 is controlled to align the first fibres to the curved blade spar 10.

It will be understood that the features described above may also apply to a variety of types of rotor blades for aircraft or vessels, such as fan blades for jet engines / gas turbines, propeller blades for engines (e.g. turboprop engines or propfans), helicopters blades for a main or tail rotor and ship propeller blades.

Various aspects of the apparatus and methods disclosed in the various embodiments may be used alone, in combination, or in a variety of arrangements not specifically discussed in the embodiments described in the foregoing, and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

## Claims

1. A blade spar for a rotor blade for a rotor of an aircraft or vessel, preferably wherein the rotor is an aircraft propeller, the blade spar comprising a laminate structure, the laminate structure comprising a plurality of plies of fibres in a matrix,
wherein the blade spar has a longitudinal axis defining a longitudinal direction, the longitudinal axis extending along a radial direction of the rotor, wherein the blade spar comprises at least a portion that is curved from the longitudinal axis,
wherein the plurality of plies comprises a first ply comprising a plurality of first fibres, wherein an alignment of the first fibres varies along the longitudinal direction to align the first fibres to the curved blade spar.

2. A blade spar according to claim 1, wherein the blade spar comprises a root, wherein at the root the first fibres are substantially aligned to the longitudinal axis.

3. A blade spar according to claim 1 or 2, wherein the blade spar comprises a tip, where at the tip the first fibres are not aligned to the longitudinal axis.

4. A blade spar according to claim 3, wherein the blade spar tapers towards the tip, wherein a portion of the first fibres do not extend to the tip, wherein a chord length and/or a thickness reduces to cause the blade spar to taper towards the tip.

5. A blade spar according to any preceding claim, wherein the blade spar is curved towards a tangential direction, wherein the tangential direction is normal to the longitudinal direction and in the plane of rotation of the rotor, wherein the first fibres are curved towards the tangential direction.

6. A blade spar according to any preceding claim, wherein the blade spar is curved towards an axial direction, wherein the axial direction is parallel to the rotation axis of the rotor, wherein the first fibres are curved towards the axial direction.

7. A blade spar according to any preceding claim, wherein the blade spar twists along the longitudinal direction, wherein the first fibres twist along the longitudinal direction to follow the blade spar.

8. A blade spar according to any preceding claim, wherein the first fibres are formed from tape, optionally a carbon tape.

9. A blade spar according to any preceding claim and comprising a plurality of first plies.

10. A blade spar according to any preceding claim, wherein the first fibres are placed with an automated fibre placement process to form the first ply.

11. A blade spar according to any preceding claim, wherein the plurality of plies comprises a second ply, wherein fibres of the second ply are orientated at ±α to the longitudinal axis, α being in the range 30° to 60° to the longitudinal axis, preferably substantially 45° to the longitudinal axis.

12. A blade spar according to any preceding claim, wherein the fibres of the second ply are manually or automatically placed.

13. A rotor blade for a rotor of an aircraft or vessel comprising the blade spar according to any preceding claim.

14. A rotor blade of claim 13, wherein the rotor blade is an aircraft propeller blade.

15. A method of manufacturing a blade spar and/or a rotor blade according to any preceding claim, the method comprising using an automated fibre placement process to align the first fibres.
